# EUROPEAN PATENT APPLICATION

(11) **EP 1 040 756 A1**
(43) Date of publication of application: **04.10.2000**
(21) Application number: 99309067.9
(22) Date of filing: 15.11.1999
(51) Int. Cl.: A01M 1/06

(54) **Insect catching apparatus**

(30) Priority: 31.03.1999 US 280515
(71) Applicant: AK Industrial Co. Ltd., San Po Kong, Kowloon (HK)
(72) Inventor: David Ying-Wai Lau, No.8 Luk Hop Street, San Po Kong,Kowloon (HK)
(74) Representative: Leale, Robin George

(57) **Abstract**

An insect catching device which is attachable to a vacuum cleaner. The device requires no filter bag, is lightweight, and easy to install. The device can be made of transparent plastics material. Users can identify insects caught and then decide whether to keep or release them. The device includes an insect retaining chamber (11), a filtering end (12) and a moveable inlet valve (6) which opens on suction being applied to the chamber.

## Description

The present invention relates to a particle-collecting apparatus that can be used in conjunction with a suction device such as a vacuum cleaner. In particular, although not necessarily solely, the apparatus may be used for catching insects.

There are a variety of modular devices for use in conjunction with vacuum cleaners. Different modular adapters have been designed to suit different situations. For instance, a brush can be attached to the end of an extension tube so that dusting and vacuuming can be performed at the same time.

An insect catching device is not new. US patent No. 4,488,331 describes an earlier generation of insect catching and pest disposal device. This device is attached to a suction extension hose of a suction-cleaning machine. However, one major disadvantage of the device is that insects caught by this device will be mixed with other dust and dirt particles in a disposable filter bag. This is especially undesirable when the user intends to catch the insects without killing them, as mixing the insects with dust and dirt may kill the insects. Even if the user does not intend to collect the insects or to separate any insects caught from other debris, allowing the insects to stay in a filter bag for an extended period of time will cause them to decompose. As most users dispose of the filter bag only once in a while, the decomposition of the dead insects could release unpleasant odours and/or cause a health hazard due to bacterial growth during the decomposition. On the other hand, more frequent disposal of the bag increases costs and inconvenience for the user.

An improvement of the above prior art is provided in US patent No. 5,052,147. In this invention, no additional disposable filter material is required. In one embodiment that may be in the form of an attachment for a conventional battery-powered vacuum cleaner, the insects are retained on a screen mounted on a carriage which is movable between rear and front positions within a housing. The particles or insects caught are located in the tubular structure prior to the vacuum generating element. Insects caught are likely to be stuck on the screen located at the end of the tubular structure. However, the insects caught can easily be killed on the screen, which will be contrary to the user's intention if insects are intended to be captured alive.

There are other insect-catching devices similar to the one just mentioned. However, these devices have various disadvantages including killing the insects, requiring the use of additional disposable filter bags or papers, indiscriminate capture of all insects, and mixing the insects captured with dirt and debris. An insect catching apparatus that is capable of catching an insect alive would allow entomologists or students doing school projects to successfully retain and examine the insect.

According to the present invention there is provided an insect catching apparatus for attachment to a suction device, comprising:
an insect retaining chamber having an inlet and a filtering means;
at least one moveable valve which is biased to a closed position but openable when vacuum pressure is created inside the said chamber;
said filtering means having apertures to allow dust and fine debris to pass through while retaining insects within the chamber; and
the said chamber being openable to release captured insects.

An embodiment of the invention will now be described by way of example and with reference to the accompanying drawings, in which:
Fig. 1 is a perspective view showing one embodiment of the present invention and a possible associated suction device, in exploded relationship;
Fig. 2 is an exploded perspective view of the embodiment of Fig. 1, again with an associated suction device;
Fig. 3 is an exploded perspective view of the embodiment of Figs. 1 and 2 alone; and
Fig. 4 is an exploded perspective view of an alternative embodiment.

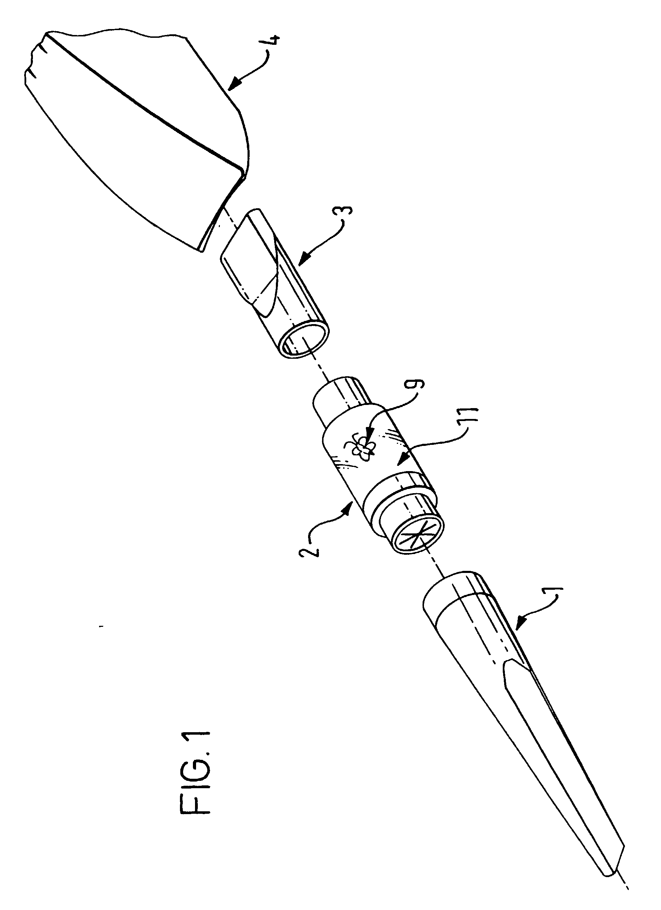

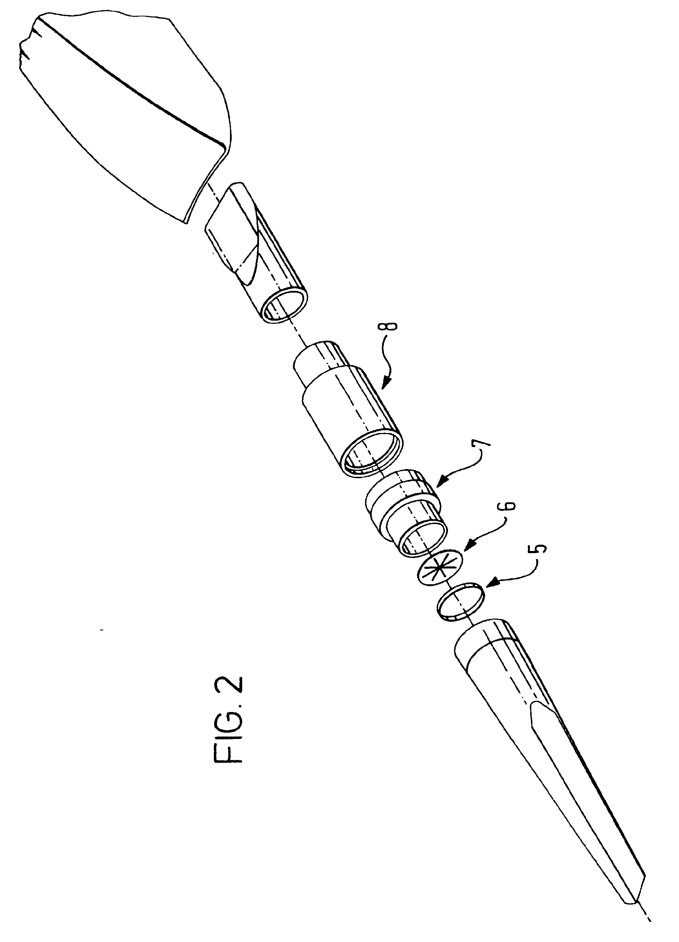

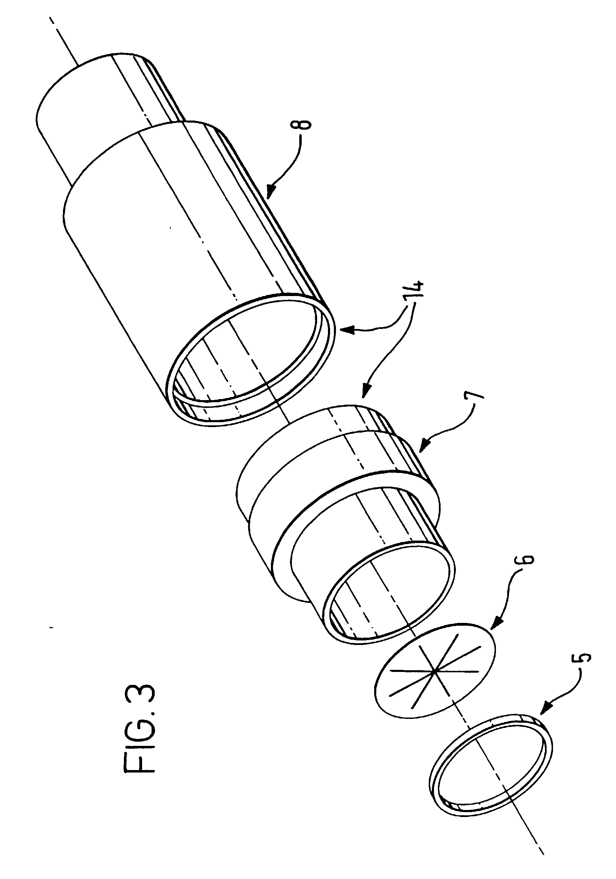

Referring to Figs. 1 to 3, the insect catching apparatus of this embodiment is used in conjunction with a standard vacuum cleaner 4. The embodiment is a modular device 2 that can be used for capturing insects 9. The device coprises four components 5, 6, 7 and 8 as shown in Figs. 2 and 3.

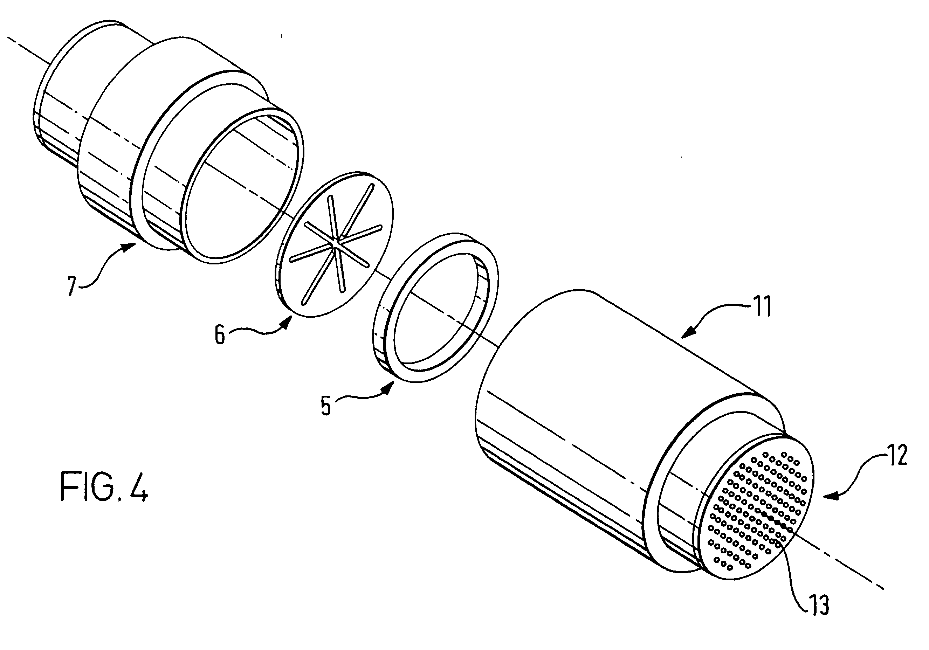

The device includes a preferably tubular chamber 11 with a transparent wall, an opening of which is equipped with a multi-valve structure 6. Insects drawn inside the tubular chamber 11 by an attached suction device will be retained inside the chamber. The ring 5 acts as a retaining means and is used to hold the multi-valve structure 6 in place so that components 5, 6 and 7 become an assembled piece. Component 8 has a filter comprising numerous openings 13 (Fig. 4) located at one end 12. These openings 13 allow air along with the insects to be drawn through the chamber 11. However, insects received in the chamber 11 will stay inside the chamber, as the sizes of these apertures 13 are significantly smaller than the size of insects caught. Dust and dirt can pass through and the insect stays within the chamber 11. No glue or traps are located in the chamber. Insects caught can therefore remain alive.

As more specifically illustrated in Fig. 1, the present device can be placed near the insect. Because of the suction through the chamber of the device, air along with the insect will be drawn through the opening 6 with or without using an extension vacuum tube 1. Component 6 is made of a flexible material and has a plurality of flexible panels that will open when the suction builds up inside the insect catching chamber 11. A single panel may be sufficient although a plurality of panels formed by radial slits in a planar sheet of material are preferred. Once the insect is captured, the vacuum unit can be turned off and the pressure inside the chamber will return to normal. The valve 6 will return to its normal closed position. Insects captured inside the chamber 11 cannot escape.

Although using a preferred flexible panel structure 6, other moveable valves could be used such as butterfly valves or similar. The valve is opened by suction pressure on one side of the valve and is biased to a closed position at neutral pressures.

Once the insect is caught, the power source of the vacuum unit can be turned off. The insect captured inside the tubular chamber can be examined determine if it is to be kept. If the insect is to be kept, the tubular chamber can be twisted open at its telescopic connection with tubular component 7 and the insect placed in a container for storage. If the insect caught is not to be kept, it can simply be freed by twisting open the tubular chamber in the same manner and releasing it.

The present device can also be used to collect larger particles other than insects.

The present embodiment consists of a modular tubular structure that has a flexible plastics valve at the inlet end of the tubular structure. Insects caught by this device will be retained in the tubular chamber. Users can clearly see into the transparent tubular chamber and decide if the insect caught is desirable. The chamber is constructed with no disposable filter material or glue. As a consequence, the insects caught can be kept alive. Users can also release undesired insects. Insects play an important role in the ecosystem and releasing the undesired ones is environmentally friendly.

The chamber 11 may be a variety of shapes other than tubular. All the components can be made from plastics material although other suitable materials can be used.

In the modification shown in Fig. 4 the valve 6 and its retaining ring 5 are located between the chamber 11 and the tubular component 7 rather than at the inlet end of the latter.

Thus, the present invention can provide an improved insect catching device when used in conjunction with most standard vacuum cleaners.

## Claims

1. An insect catching apparatus for attachment to a suction device, comprising:
an insect retaining chamber (11) having an inlet and a filtering means (12);
at least one moveable valve (6) which is biased to a closed position but openable when vacuum pressure is created inside the said chamber;
said filtering means having apertures to allow dust and fine debris to pass through while retaining insects within the chamber; and
the said chamber being openable to release captured insects.

2. Apparatus as claimed in claim 1, wherein said at least one valve (6) comprises at least one flexible panel arranged to be pulled open when vacuum suction is created inside the said insect retaining chamber.

3. Apparatus as claimed in claim 2, wherein said at least one flexible panel is biased to a closed position under normal pressure, by the elastic nature of the material.

4. Apparatus as claimed in claim 2 or 3, wherein said at least one flexible panel comprises a planar sheet of material retained at or adjacent an inlet of said chamber (11).

5. Apparatus as claimed in claim 4, wherein said at least one flexible panel is formed with at least two slits radiating from a centre.

6. Apparatus as claimed in any preceding claim, wherein the said chamber is openable by separation of one end thereof from an adjoining part.
